(19) **Europäisches Patentamt**

**European Patent Office**

**Office européen des brevets**

(11) Veröffentlichungsnummer: **0 274 559**
**B1**

(12) **EUROPÄISCHE PATENTSCHRIFT**

(45) Veröffentlichungstag der Patentschrift:
12.09.90

(51) Int. Cl.⁵: **F16N 27/00, F16N 7/30,
B65G 45/02**

(21) Anmeldenummer: **87103888.1**

(22) Anmeldetag: **17.03.87**

(54) Schmierstoff-Injektor und Vorrichtung zur Schmierung von wandernden Schmierstellen.

(30) Priorität: **13.01.87 DE 3700782**

(43) Veröffentlichungstag der Anmeldung:
**20.07.88 Patentblatt 88/29**

(45) Bekanntmachung des Hinweises auf die Patenterteilung:
**12.09.90 Patentblatt 90/37**

(84) Benannte Vertragsstaaten:
**BE DE FR GB IT NL SE**

(56) Entgegenhaltungen:
**DE-A- 2 064 349**
**DE-B- 1 190 393**
**FR-A- 1 098 589**
**GB-A- 919 107**
**GB-A- 1 092 602**
**GB-A- 2 081 820**
**US-A- 3 446 314**
**US-A- 4 067 414**

(73) Patentinhaber: **De Limon Fluhme GmbH & Co.,
Arminstrasse 15, 4000 Düsseldorf(DE)**

(72) Erfinder: **Saretzky, Horst, Gartenstrasse 11,
D-5828 Ennepetal 13(DE)**
Erfinder: **Bemba, Siegfried, Nelkenweg 30,
D-4049 Rommerskirchen 1(DE)**

(74) Vertreter: **Patentanwälte Dipl.-Ing. Alex Stenger
Dipl.-Ing. Wolfram Watzke Dipl.-Ing. Heinz J. Ring,
Kaiser-Friedrich-Ring 70, D-4000 Düsseldorf 11(DE)**

**Beschreibung**

Die Erfindung betrifft einen Schmierstoff-Injektor für eine Vorrichung zur Schmierung von wandernden Schmierstellen, insbesondere für Rollen eines Kettenförderers deren Lager mit Schmierstoff über einen Schmiernippel nachfüllbar sind, auf den der Injektor während des Schmiervorgangs aufpressbar ist, mit einem Gehäuse, in dem mittels Druckluft betätigbarer, federbelasteter sowie mit einer zum Aufsetzen auf den Schmiernippel entsprechend ausgebildeten Injektorspritze verbundener Verfahrkolben angeordnet ist, wobei zwischen dem Verfahrkolben und dem Gehäuse ein Ringraum freigelassen ist, der einen im Gehäuse ausgebildeten Schmierstoffeinlaß über eine im Verfahrkolben ausgebildete Bohrung mit einem im Verfahrkolben abgabeseitig koaxial ausgebildeten Zylinderraum verbindet, in dem ein federbelasteter Förderkolben für den abzugebenden Schmierstoff angeordnet ist. – Die Erfindung betrifft ferner eine Vorrichtung zur Schmierung von wandernden Schmierstellen, insbesondere Zentralschmieranlage für Rollen eines Kettenförderers, deren Lager mit Schmierstoff über einen Schmiernippel nachfüllbar sind, unter Verwendung eines an eine Speiseleitung angeschlossenen, druckluftbetätigten sowie zum Aufpressen auf den Schmiernippel auf einem mit diesem verfahrbaren und an dessen Bewegung kuppelbaren Schlitten angeordneten Schmierstoff-Injektors der eben beschriebenen Art, mit einer wegabhängigen Steuerung des Abschmiervorgangs, wobei die Koppelung Schlitten-Injektor/ Schmiernippel einen Druckluftzylinder betätigt, dessen Kolbenstange über einen Hebel mit einem Mitnehmer des Schlittens zur Synchronverfahrung Schlitten-Injektor/Schmiernippel verbunden ist, wobei weiterhin über ein vom Schlitten betätigtes Steuerglied die Luftzufuhr zum Verfahrkolben des Injektors zum Aufpressen der Injektorspritze auf den Schmiernippel freigebbar ist, wobei weiterhin kurz vor Ende des Verfahrwegs des Schlittens ein weiteres Steuerglied zum Abschalten der Schmierstoffbeaufschlagung angeordnet ist, wonach die Luftzufuhr zum Injektor abgeschaltet und sodann die Luftdruckbeaufschlagung des Luftzylinders weggenommen wird, und wobei schließlich zumindest eine Rückholfeder zur Rückverfahrung des Schlittens in seine Ausgangsposition vorgesehen ist.

Aus der GB-A 1 092 602 ist ein Schmierstoff-Injektor sowie eine Vorrichtung zur Schmierung von wandernden Schmierstellen dieser Art bekannt. Der Schmierstoff-Injektor muß dabei zum Aufsetzen auf einen Schmiernippel nicht in seiner Gesamtheit verfahren werden, sondern kann mit seiner Injektorspitze teleskopartig ausgefahren werden. Zu diesem Zweck ist ein mittels eines Schlittens verfahrbares Gehäuse vorgesehen, in dem ein federbelasteter Verfahrkolben mittels Druckluft verfahrbar angeordnet ist. An seinem vorderen Ende ist dieser Verfahrkolben mit einer Injektorspitze versehen, mittels der der Verfahrkolben auf einen entsprechend ausgebildeten Schmiernippel aufgesetzt werden kann. Im Bereich dieser Injektorspitze des Verfahrkolbens ist ein Rückschlagventil vorgesehen. Innerhalb des Verfahrkolbens ist ein koaxialer Zylinderraum ausgebildet, der über eine Querbohrung im Verfahrkolben sowie über eine zwischen dem Verfahrkolben und dem äußeren Gehäuse freigelassenen Ringraum mit einem im äußeren Gehäuse ausgebildeten Schmierstoffeinlaß in Verbindung steht. Im Zylinderraum ist ein Förderkolben verschiebbar angeordnet, dessen Kolbenstange aus dem rückseitigen Ende des Verfahrkolbens herausgeführt ist, wo das freie Ende einen Kolben aufweist, welcher im Gehäuse längsverschiebbar angeordnet ist und mittels welchem der Förderkolben im Zylinderraum des Verfahrkolbens verschiebbar ist.

Bei diesem bekannten Schmierstoff-Injektor ist von Nachteil, daß sein Förderkolben druckluftbetätigt ist und daß der Injektor insgesamt zum Nachtropfen neigt, da der vor dem Rückschlagventil in der Injektorspitze verbleibende Schmierstoffrest in unerwünschter Weise abgegeben wird, insbesondere weil wegen der Schmierstoff-Nachfüllung des Injektors der Schmierstoffdruck über das niemals ganz dichte Rückschlagventil in die Injektorspitze übertragen wird und damit den Restausstoß an Schmierstoff verursacht. Derartige abtropfende Schmierstoffpartikel beschädigen jedoch in Lackierereien die Karosserieteile und mindern die Qualität der Lackierung, was zum Ausschuß führt.

Aus der DE-A 2 064 349 ist weiterhin ein Schmierstoffzuteiler für eine Schmieranlage bekannt. Bei diesem bekannten Injektor wird zwar der Schmiervorgang durch den Druckimpuls von der Schmierstoffeinspeisung in den Injektoren ausgelöst, doch muß nachteiligerweise der gesamte Injektor verfahren werden, um die Verbindung zu einem Schmiernippel herzustellen.

Davon ausgehend liegt der Erfindung die Aufgabe zugrunde, einen Schmierstoff-Injektor sowie eine Schmiervorrichtung zu schaffen, mit der eine genaue Dosierung der abgegebenen Schmierstoffmengen ohne Restabtropfen sowohl für Öl- als auch für Fließfett ermöglicht ist und der Schmierablauf insbesondere hinsichtlich der Synchronisierung der miteinander zu verfahrenden Teile und der Positionierung zueinander hinsichtlich der Genauigkeit wesentlich verbessert ist.

Als technische Lösung wird mit der Erfindung ein Schmierstoff-Injektor vorgeschlagen, der dadurch gekennzeichnet ist, daß in den Zylinderraum ein Zylinderkörper für den ausschließlich in diesem angeordneten Förderkolben sowie für einen dem Förderkolben vorgeschalteten sowie ebenfalls federbelasteten, zusätzlichen Steuerkolben mit Spiel zur Ausbildung eines von der einen Seite des Förderkolbens zur anderen Seite führenden Überströmkanals eingesetzt ist, daß der Zylinderkörper einen Vorsteuerraum im Zylinderraum freiläßt und vom Steuerkolben gesteuerte Kanäle zur einen Seite des Förderkolbens und mit dem Überströmkanal in Verbindung bringbare weitere Steuerkanäle aufweist und daß der Schmiervorgang durch den Druckimpuls von der Schmierstoffeinspeisung in den Injektor ausgelöst wird.

Hierdurch ist ein Schmierstoff-Injektor geschaffen, dessen "innere Ausbildung" seines Verfahrkolbens und seines Gehäuses zur Schmierstoffabgabe für genau dosierte Schmierstoffmengen sorgen, ohne daß die Gefahr besteht, daß es zu einem Nachtropfen von Schmierstoff nach Beendigung des Drucktakts kommt. Durch das gleichachsige Bauprinzip ist auch in jeder Umschichtungsphase ein störungsfreies Durchfließen des Schmierstoffs durch den Injektor gewährleistet, wobei auch hohe Gegendrücke nippelseitig überwunden werden können.

Dabei ist es zweckmäßig, wenn in einer Weiterbildung der Steuerkolben und der Förderkolben in ihrer Funktion und Anordnung unabhängig voneinander vom Schmierstoffdruck betätigt sind und durch ihre Federn in gleicher Wirkrichtung hilfsgesteuert sind und wenn der Überströmungskanal kreisringförmig ausgebildet ist.

Vorzugsweise ist in der Injektorspitze im Abgabekanal eine Manschette angeordnet, die eine zusätzliche Gewähr gegen Nachtropfen bildet.

Zur Erleichterung der Abstimmung der Funktion von Steuerkolben und Förderkolben sowie den verschiedenen inneren Schmierstoffumschichtungen ist es vorteilhaft, die Zylinderbohrung für den Steuerkolben gegenüber der Zylinderbohrung für den Förderkolben durch ein eingesetztes Trennstück zu verschließen. Generell können Steuerkolben und Förderkolben durch gleiche Federn zur Verringerung des Herstellungsaufwandes und der Kosten belastet sein.

In einer einfachen, zweckmäßigen Ausführungsform des erfindungsgemäßen Injektors besitzt der Steuerkolben zwischen seinen beiden Enden eine durch Querschnittsverminderung gebildeten Ringraum, der in Arbeitsstellung die Verbindung vom Vorsteuerraum zu dem Steuerkanal herstellt, der mit der einen Seite des Förderkolbens direkt in Verbindung ist, wobei der zu dem Überströmkanal führende Steuerkanal durch den Steuerkolben geschlossen ist. Zur Verbindung vom Überströmkanal zur anderen Seite des Förderkolbens kann eine Sternscheibe vorgesehen sein, die zwischen dem Zylinderkörper und der Injektorspitze angeordnet ist und Öffnungen zum Umschichten des Schmierstoffs freiläßt.

Die Vorrichtung zur Schmierung von wandernden Schmierstellen, insbesondere Zentralschmieranlage für Rollen eines Kettenförderers, deren Lager mit Schmierstoff über einen Schmiernippel nachfüllbar sind, unter Verwendung eines Schmierstoff-Injektors der zuvor beschriebenen Art ist dadurch gekennzeichnet, daß die Koppelung Schlitten-Injektor/Schmiernippel durch ein von dem abzuschmierenden Teil geschaltetes Steuerglied auslösbar ist, daß vom Schlitten über ein weiteres Steuerglied (Verzögerungseinrichtung) ein Magnetventil zur Öffnung der Schmierstoffzufuhr von der Speiseleitung zum Injektor betätigbar ist und damit dessen Steuerkolben vom Schmierstoffdruck beaufschlagt und der Abschmiervorgang durchführbar ist und daß die Luftzufuhr zum Injektor über eine Verzögerungseinrichtung abschaltbar ist.

Mit dieser Schmiervorrichtung ist es in konstruktiv einfacher Weise möglich, das abzuschmierende Teil über eine gewisse Länge seines Bewegungswegs exakt mit dem Injektor zu koppeln und während dieser Zeit den Abschmiervorgang durchzuführen sowie anschließend die Bereitschaftsposition wieder einzunehmen. Dabei besteht die Gefahr des befürchteten Abtropfens von Schmierstoff auf zu transportierende Teile, beispielsweise Karosserieteile, nicht mehr.

Es ist vorteilhaft, als Steuerglieder Lichtschranken oder Näherungsschalter vorzusehen.

Gemäß einer besonders zweckmäßigen Weiterbildung der erfindungsgemäßen Schmiervorrichtung sind einander gegenüberliegend zwei Injektoren angeordnet, die entweder gleichzeitig oder einzeln aktiviert den Schmiervorgang vornehmen, wobei mit der Kolbenstange des Druckluftzylinders zwei einander gegenüberliegend angeordnete Hebel und Mitnehmer verbunden sind. Zur Begrenzung des Rückfahrweges des Schlittens ist zweckmäßigerweise ein Pralldämpfer vorgesehen.

Weitere Einzelheiten, Merkmale und Vorteile des Gegenstandes der Erfindung ergeben sich aus der nachfolgenden Beschreibung der zugehörigen Zeichnung, in der ein erfindungsgemäßer Schmierstoff-Injektor sowie eine Zentralschmieranlage für Rollen eines Kettenförderers mit Injektor schematisch dargestellt sind. In der Zeichnung zeigt:

Fig. 1 einen Schmierstoff-Injektor im Schnitt in Bereitschaftsstellung,
Fig. 2 den Schmierstoff-Injektor der Fig. 1 in Abschmierposition (Drucktakt),
Fig. 3 den Schmierstoff-Injektor der Fig. 1 in Umschichtposition (Entspannungstakt),
Fig. 4 eine Rollenschmiervorrichtung schematisch in Seitenansicht,
Fig. 5 die Rollenschmiervorrichtung der Fig. 4 in Draufsicht,
Fig. 6 einen Schmierstoff-Injektor mit Mitnehmer der Rollenschmiervorrichtung der Fig. 4 mit dem Mitnehmer außer Eingriff in Draufsicht,
Fig. 7 das Detail gemäß Fig. 6 mit dem Mitnehmer im Eingriff und
Fig. 8 die Schmiervorrichtung in ihrer Gesamtheit als Schaltschema.

Der Schmierstoff-Injektor 1 besteht im wesentlichen aus einem hohlzylindrischen Gehäuse 2, in welchem ein mittels Druckluft betätigbarer, durch eine Feder 3 belasteter Verfahrkolben 4 angeordnet ist. Zur Lagerung der Feder 3 ist im Gehäuse 2 eine Abstufung 5 ausgebildet. Als Widerlage für die Rückholfeder 3 dient eine entsprechende Abstufung an der in der Zeichnung linken Seite des Verfahrkolbens 4, dessen Rückanschlag im Verfahrweg durch einen in das Gehäuse stirnseitig eingeschraubten Stopfen 6 mit einer zentrischen Luftzuführung 7 gebildet ist. Auf der gegenüberliegenden Stirnseite (in der Zeichnung rechts) ist der Verfahrkolben 4 mit einer Injektorspitze 8 verbunden.

Zwischen dem Verfahrkolben 4 und dem Gehäuse 2 ist im mittleren Bereich ein Ringraum 9 freigelassen, der einen im Gehäuse 2 ausgebildeten Schmierstoffeinlaß 10 über eine Querbohrung 11 des Verfahrkolbens mit einem im Verfahrkolben abgabeseitig (in der Zeichnung rechts) koaxial ausgebildeten Zylinderraum 12 verbindet. Der Zylinderraum 12 ist mehrfach abgestuft, so daß in ihn von der Stirnseite her ein Zylinderkörper 13 einsetzbar ist, der mit einer Schulter an einer Abstufung rückseitig gehalten ist und abgabeseitig durch die eingeschraubte Injektorspitze 8, wobei zwischen Injektorspitze 8 und Zylinderkörper 13 eine Sternscheibe 14 eingelegt ist, die Öffnungen zum Umschichten von Schmierstoff freiläßt.

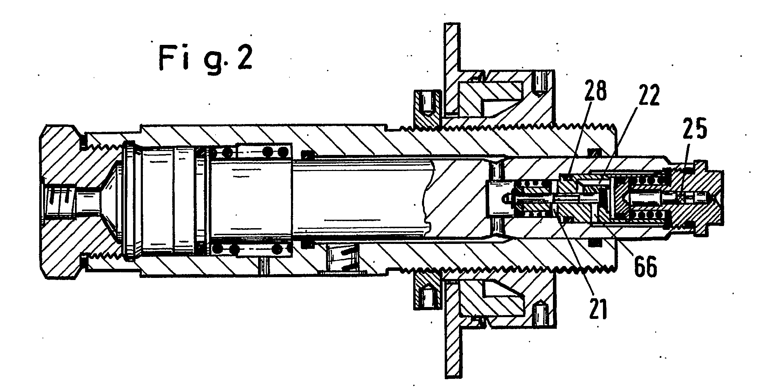

Der Zylinderkörper 13 nimmt einen durch eine Feder 15 belasteten Steuerkolben 16 und einen durch eine gleich große Feder 17 in gleicher Wirkrichtung belasteten Förderkolben 18 auf, dessen Stellung zur Veränderung der Fördermengen einstellbar ist. Zur Ausbildung eines von der einen Seite (in der Zeichnung der linken Seite) des Förderkolbens 18 zur anderen Seite (in der Zeichnung rechte Seite) des Förderkolbens führenden Überströmkanals 19 ist der Zylinderkörper 13 mit Spiel zum Zylinderraum 12 des Verfahrkolbens 4 eingesetzt, so daß dort ein Ringraum vorliegt. Ferner läßb der Zylinderkörper 13 einen Vorsteuerraum 20 links im Zylinderraum frei und sind vom Steuerkolben 16 gesteuerte Kanäle 21 (Fig. 2 der Zeichnung) zur einen Seite des Förderkolben (in der Zeichnung linken Seite) und mit dem Überströmkanal 19 in Verbindung bringbare weitere Steuerkanäle 22 und 66 im Zylinderkörper 13 ausgebildet.

In der Injektorspitze 8 ist zentrisch eine Bohrung als Schmierstoffabgabekanal 23 vorgesehen, der die rechte Seite des Förderkolbens 18 mit einer passend für einen Kegelnippel oder Trichternippel ausgebildeten Entnahmeöffnung 24 der Injektorspitze 8 verbindet. In den Kanal 23 ist eine Manschette 25 eingesetzt, deren kegelstumpfförmige Ausbildung nur in Richtung Entnahme unter dem Schmierstoffdruck den Durchfluß freigibt, in der entgegengesetzten Richtung aber dicht schließt.

Im gezeichneten Ausführungsbeispiel ist die Zylinderbohrung für den Steuerkolben 16 gegenüber der Zylinderbohrung für den Förderkolben 18 durch ein eingesetztes Trennstück 26 verschlossen. Der Steuerkolben 16 weist zur Ansteuerung der Steuerkanäle etwa mittig eine Querschnittsverringerung auf, die einen Ringraum 28 zum Zylinderkörper 13 schafft, der einen Überströmraum für Schmierstoff darstellt. Schließlich ist noch darauf hinzuweisen, daß sämtliche Teile des Injektors gegeneinander durch Dichtringe 27 abgedichtet sind, deren detaillierte Anordnung der Zeichnung entnehmbar ist.

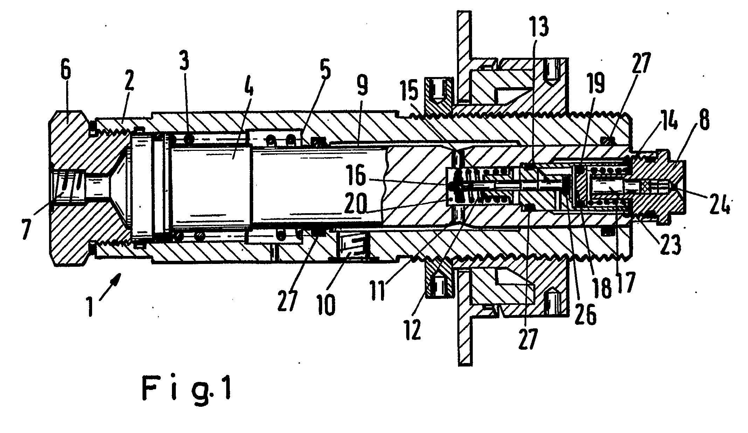

In der Ruhestellung gemäß Fig. 1 der Zeichnung ist die zum Schmierstoffeinlaß 10 führende Speiseleitung entspannt und befinden sich der Steuerkolben 16 und der Förderkolben 18 in ihrer gezeichneten linken Position. Findet eine durch ein Steuerglied aufgelöste Beaufschlagung des Verfahrkolbens 4 mit Druckluft durch die Luftzuführung 7 statt, bewegt sich der Verfahrkolben 4 mit der Injektorspitze 8 in die in Fig. 2 der Zeichnung dargestellte Stellung.

Fig. 2 der Zeichnung zeigt den Drucktakt, bei dem nach Unter drucksetzen des Schmierstoffeinlasses 10 die Druckbeaufschlagung über den Ringraum 9, die Querbohrungen 11 im Verfahrkolben auf den Vorsteuerraum 20 übertragen wird. Gegen die Wirkung der Feder 15 wird im Drucktakt der Steuerkolben 16 in seine in Fig. 2 der Zeichnung dargestellte rechte Position verschoben, so daß Schmierstoff aus dem Vorsteuerraum 20 über die Steuerkanäle 21, den Ringraum 28 im Steuerkolben sowie die Steuerkanäle 22 unter den Förderkolben 18 (linke Seite) gelangt. Der Steuerkanal 66 ist in dieser Position verschlossen.

Unter dem Einfluß des Schmierstoffdrucks bewegt sich der Förderkolben 18 gegen die Wirkung seiner Feder 17 nach rechts und verdrängt den vor ihm gespeicherten Schimerstoff (rechte Seite) durch den Abgabekanal 23 und die Entnahmeöffnung 24 in den in dieser Position aufgesetzten Schmiernippel als Verbraucherstelle. Der Zuleitungsdruck ist in diesem Augenblick größer als die Federkräfte.

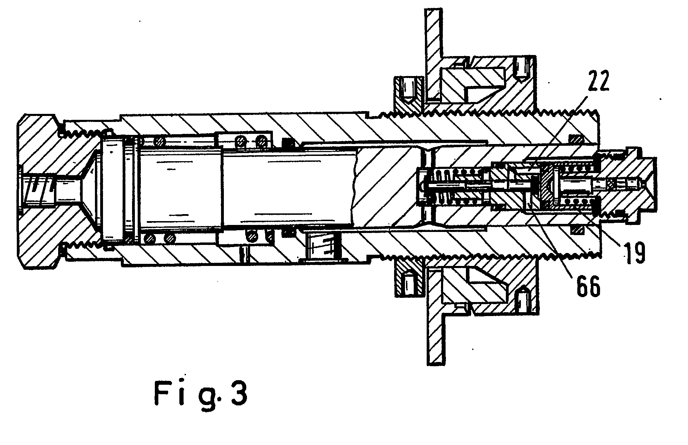

Wird die Speiseleitung entlastet und damit der Schmierstoffdruck vom Schmierstoffeinlaß 10 weggenommen, ergibt sich das Bild im Entspannungstakt gemäß Fig. 3 der Zeichnung. Die Feder 15 bringt den Steuerkolben 16 in seine in der Zeichnung linke Stellung. Dabei wird gegen den Vorsteuerraum abgedichtet, so daß bei der ebenfalls initiierten Bewegung des Förderkolbens 18 aufgrund der Wirkung seiner Feder 17 nach links in der Zeichnung Schmierstoff von der linken Seite des Förderkolbens über die Steuerkanäle 22 und 66 und den ringraumförmigen Überströmkanal 19 sowie die Öffnungen in der Sternscheibe 14 umgeschichtet werden kann in den Raum rechts, d.h. vor dem Förderkolben 18. Nach dieser Umschichtung im Entspannungstakt ist der Injektor erneut zur Abgabe eines Schmierstoffstoßes bereit. Etwa gleichzeitig wird - wie Fig. 3 der Zeichnung zeigt - der Verfahrkolben nach Abschaltung der Luftdruckbeaufschlagung unter Wirkung seiner Feder 3 in seine Ausgangsposition links in der Zeichnung zurückverfahren.

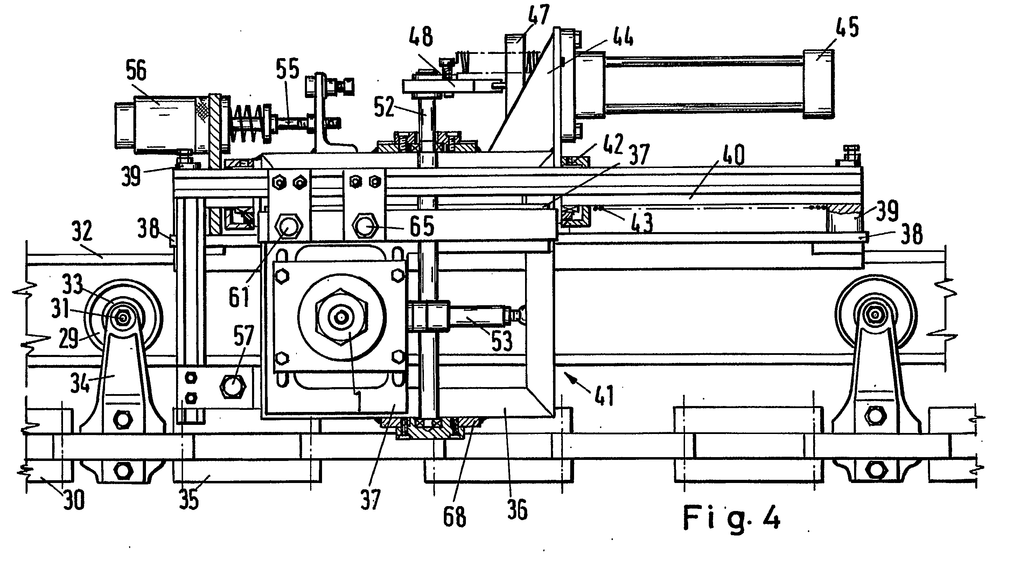

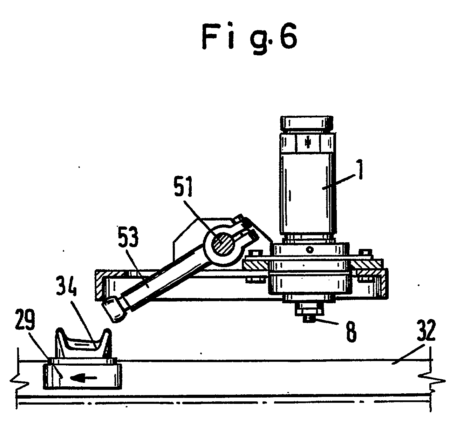

Die Fig. 4 bis 8 der Zeichnung verdeutlichen eine Zentralschmieranlage für Rollen 29 eines Kettenförderers 30, deren Lager mit Schmierstoff über einen Schmiernippel 31 nachfüllbar sind. Dabei werden zwei einander gegenüberliegend angeordnete Schmierstoff-Injektoren 1 gemäß den Fig. 1 bis 3 angewandt.

Der Kettenförderer 30 besteht im wesentlichen aus einem Doppel-T-Träger 32, auf dem eine Vielzahl von Tragrollen 29 im Abstand zueinander angeordnet sind. Die Tragrollen 29 sind auf einem zentrischen Rollenbolzen mittels eines Lagers 33 jeweils gelagert, wobei die Versorgung des Lagers 33 mit Schmierstoff über den Schmiernippel 31, den Rollenbolzen und eine Querbohrung vorgenommen wird. Jede Rolle 29 trägt eine Kettenhalterung 34 für eine angetriebene Endloskette 35 und ist ferner dafür vorgesehen, einen nicht dargestellten Lasthaken für das Traggut zu halten.

Auf der Oberseite des Doppel-T-Trägers 32 ist eine rechteckförmige Grundplatte 38 befestigt, die vier Halteböcke 39 zur Halterung zweier im Abstand zueinander parallel und zum Doppel-T-Träger angeordnete Führungsstangen 40 trägt.

Auf den Führungsstangen ist axial, d.h. mit der Bewegung der Tragrollen 29 verschiebbar ein Schlitten 41 angeordnet, der einen quadratartig gestalteten Schlittenrahmen 36 besitzt, dessen Rahmenelemente durch Haltebleche 37 für zwei einander gegenüberliegend angeordnete Injektoren 1 verbunden sind. Im Schlittenrahmen 36 sind vier Lager 42 gehalten, durch die sich die Führungsstangen 40 erstrecken, so daß die axiale Verschiebbarkeit des Gesamtschlittens gegen die Wirkung von auf den Führungsstangen 40 angeordneten Rückholdruckfedern 43 ermöglicht ist.

An dem Schlittenrahmen 36 ist ferner eine Haltekonsole 44 für einen Luftzylinder 45 angeschweißt, dessen Kolbenstange 46 mit einer Platte 47 versehen ist, an der zwei Hebel 48 anliegen. Die Hebel 48 sind gegen die Wirkung je einer zwischen der Haltekonsole 44 und dem zugehörigen Hebel 48 verlaufenden Feder 49 durch die ausfahrbare Kolbenstange des Luftzylinders verschwenkbar. Kleine Rollen 50 an den freien Enden der leicht abgewinkelten Hebel erleichtern das Zusammenwirken mit der Platte 47.

Ein Halteblech 67 auf dem oberen Rahmenteil des Schlittenrahmens 36 sowie ein entsprechend ausgebildetes Halteblech 68, an den unteren Rahmenteilen, ist mit Lagern für zwei senkrecht verlaufende Achsen 51, 52 versehen, die in Höhe der Injektoren 1 bzw. der Achsen der Tragrollen 29 je einen stangenförmigen Mitnehmer 53, 54 tragen, die bei einer Verschwenkung der zugehörigen Hebel 48 in den Verfahrbereich der Rollen 29 gelangen und damit die kraftschlüssige Verbindung Rolle-Schlitten zur gemeinsamen Verfahrung herstellt. Die örtliche Zuordnung der Mitnehmer zu den Injektoren 1 ist dergestalt, daß ein absolut passgenaues Aufsetzen der Injektorspitze 8 auf den zugehörigen Schmiernippel 31 des abzuschmierenden Rollenlagers möglich ist.

Der Schlittenrahmen 36 trägt ferner auf seiner Oberseite einen Anschlag 55, der beim Rückverfahren des Schlittens 41 zur Abbremsung seiner Bewegung mit einem Pralldämpfer 56 nach Art eines Stoßdämpfers zusammenwirkt, der auf der Grundplatte 38 in korrespondierender Höhe befestigt ist.

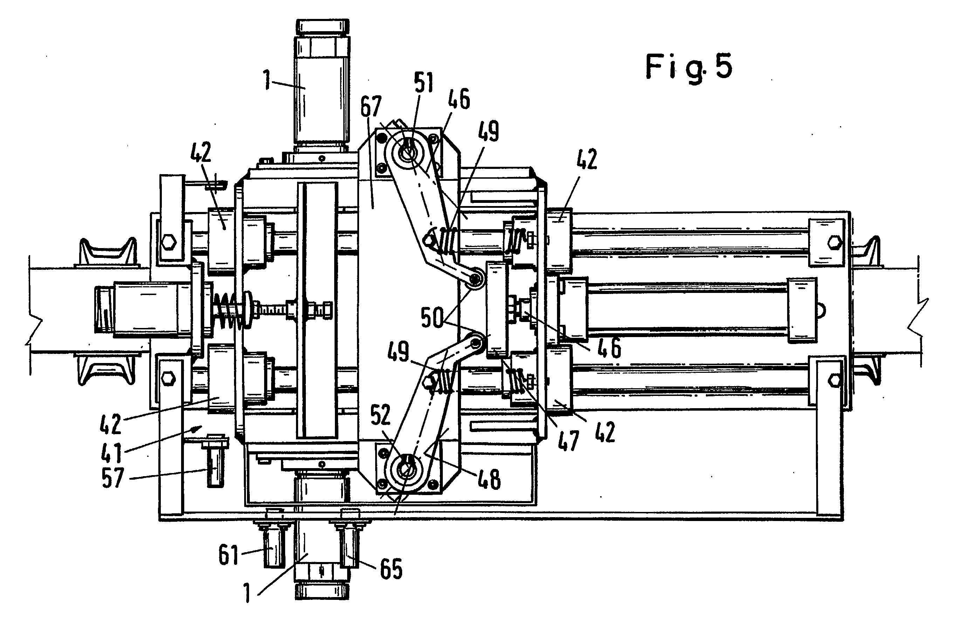

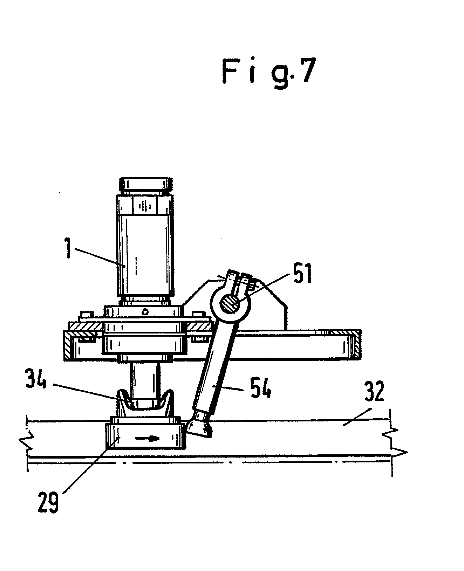

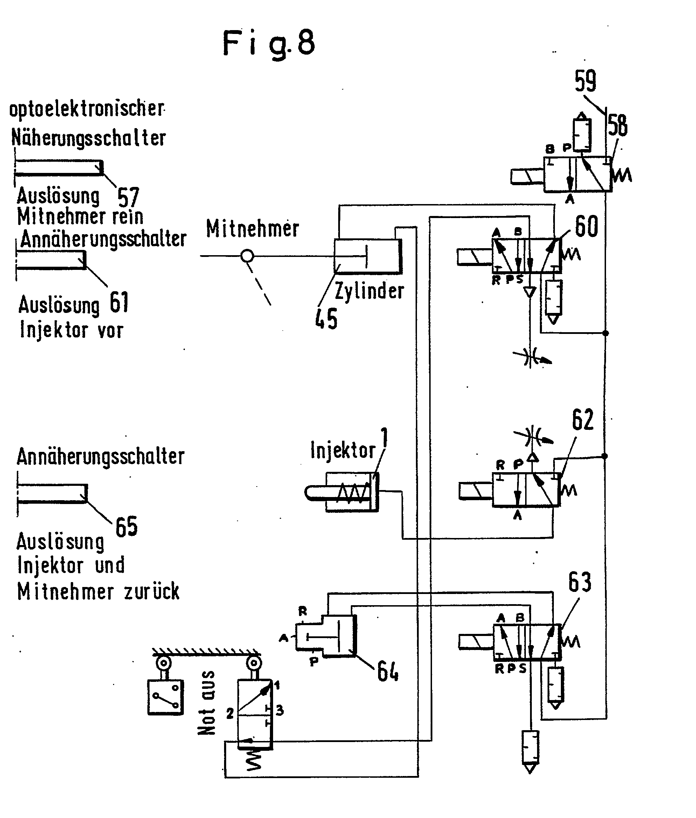

Das Funktionsschema der oben beschriebenen Schmiervorrichtung ergibt sich aus Fig. 8 der Zeichnung. Demnach wird die gesamte Abschmiervorrichtung aktiviert, sobald die Kette 35 des Förderers läuft. Wenn eine Kettenhalterung 34 eine entsprechend dem Bewegungsweg positionierte Lichtschranke 57 passiert wird zunächst eine 3/2-Wegeventil 58 in einer Druckluft-Versorgungsleitung 59 auf Durchlaß gestellt und wird über ein 5/2-Wegeventil 60 der Luftzylinder 45 mit Druckluft beaufschlagt. Seine Kolbenstange 46 verfährt aus der in Fig. 4 gezeigten Stellung nach links und verschwenkt damit die an der Platte 47 anliegenden Hebel 48. Hierdurch verdrehen sich die beiden Achsen 51, 52 derart, daß die daran befestigten Mitnehmer 53, 54 in die Bewegungsbahn der Tragrolle 29 gelangen, wie dies aus Fig. 7 der Zeichnung erkennbar ist. Mit der Bewegung der Tragrolle ist damit der Schlitten 41 gekuppelt, so daß er im folgenden aus der Position der Fig. 4 und 5 heraus nach rechts auf den Führungsstangen 40 gleitend verschoben wird.

Vom Schlitten 41 wird nun ein Näherungsschalter 61 betätigt, über den mittels eines 3/2-Wegeventils 62 die Luftzufuhr zum Verfahrkolben 4 jedes Injektors 1 freigegeben wird. Die Injektorspitze 8 wird auf den jeweiligen Schmiernippel 31 der Rolle 29 aufgesetzt und angepreßt.

Mit Verzögerung wird anschließend ein 5/2-Wegeventil 63 geschaltet, das über ein 3/2-Wegeventil 64 Schmierstoff zum Schmierstoffeinlaß 10 des Injektors freigibt, so daß die verschiedenen Bewegungen des Steuerkolbens und Förderkolbens des jeweiligen Injektors ausgelöst werden und mit einer dosierten Schmierstoffmenge die Abschmierung des Rollenlagers 33 von beiden Seiten vorgenommen wird.

Kurz vor Ende des Verfahrwegs des Schlittens 41 wird über einen weiteren Näherungsschalter 65 zunächst der Schmierstoffdruck zu den Injektoren abgeschaltet und sodann die Luftdruckbeaufschlagung des Injektors beendet, so daß aufgrund der Wirkung der Feder 3 die Verbindung der Injektorspitze mit dem abzuschmierenden Nippel gelöst wird. Anschließend wird über eine Verzögerungseinrichtung die Druckluftbeaufschlagung des Luftzylinders 45 abgeschaltet, so daß der Schlitten 41 durch die Rückholdruckfedern 43 in seine Ausgangsposition gemäß Fig. 4 und 5 der Zeichnung zurückgefahren wird. Der Pralldämpfer 56 fängt die Bewegungsenergie ab.

Es ist erkennbar, daß die Gesamtvorrichtung nicht nur für eine beidseitige Abschmierung - wie beschrieben - sondern auch für eine einseitige Abschmierung wechselweise für die innen und außen laufende Rolle einer Kettenhalterung möglich ist.

**Patentansprüche**

1. Schmierstoff-Injektor (1) für eine Vorrichtung zur Schmierung von wandernden Schmierstellen, insbesondere für Rollen (29) eines Kettenförderers (30), deren Lager (33) mit Schmierstoff über einen Schmiernippel (31) nachfüllbar sind, auf den der Injektor (1) während des Schmiervorgangs aufpressbar ist, mit einem Gehäuse (2), in dem ein mittels Druckluft betätigbarer, federbelasteter sowie mit einer zum Aufsetzen auf den Schmiernippel (31) entsprechend ausgebildeten Injektorspitze (8) verbundener Verfahrkolben (4) angeordnet ist, wobei zwischen dem Verfahrkolben (4) und dem Gehäuse (2) ein Ringraum (9) freigelassen ist, der einen im Gehäuse (2) ausgebildeten Schmierstoffeinlaß (10) über eine im Verfahrkolben (4) ausgebildete Bohrung (11) mit einem im Verfahrkolben (4) abgabeseitig koaxial ausgebildeten Zylinderraum (12) verbindet, in dem ein federbelasteter Förderkolben (18) für den abzugebenden Schmierstoff angeordnet ist, dadurch gekennzeichnet, daß in den Zylinderraum (12) ein Zylinderkörper (13) für den ausschließlich in diesem angeordneten Förderkolben (18) sowie für einen dem Förderkolben (18) vorgeschalteten sowie ebenfalls federbelasteten, zusätzlichen Steuerkolben (16) mit Spiel zur Ausbildung eines von der einen Seite des Förderkolbens (18) zur anderen Seite führenden Überströmkanals (19) eingesetzt ist, daß der Zylinderkörper (13) einen Vorsteuerraum (20) im Zylinderraum (12) freiläßt und vom Steuerkolben (16) gesteuerte Kanäle (21) zur einen Seite des Förderkolbens (18) und mit dem Überströmkanal (19) in Verbindung bringbare weitere Steuerkanäle (22 und 66) aufweist und daß der Schmiervorgang durch den Druckimpuls von der Schmierstoffeinspeisung in den Injektor (1) ausgelöst wird.

2. Schmierstoff-Injektor nach Anspruch 1, dadurch gekennzeichnet, daß der Steuerkolben (16) und der Förderkolben (18) in ihrer Funktion und Anordnung unabhängig voneinander vom Schmierstoffdruck betätigt sind und durch ihre Federn (15 bzw. 17) in gleicher Wirkrichtung hilfsgesteuert sind und daß der Überströmkanal (19) kreisringförmig ausgebildet ist.

3. Schmierstoff-Injektor nach Anspruch 1 oder 2, dadurch gekennzeichnet, daß in der Injektorspitze (8) im Abgabekanal eine Manschette (25) angeordnet ist.

4. Schmierstoff-Injektor nach einem der Ansprüche 1 bis 3, dadurch gekennzeichnet, daß die Zylinderbohrung für den Steuerkolben (16) gegenüber der Zylinderbohrung für den Förderkolben (18) geschlossen ist durch ein eingestztes Trennstück (26).

5. Schmierstoff-Injektor nach einem der Ansprüche 1 bis 4, dadurch gekennzeichnet, daß der Steuerkolben (16) und der Förderkolben (18) durch gleiche Federn (15, 17) belastet sind.

6. Schmierstoff-Injektor nach einem der Ansprüche 1 bis 5, dadurch gekennzeichnet, daß der Steuerkolben (16) zwischen seinen beiden Enden einen durch Querschnittsverminderung gebildeten Ringraum (28) besitzt, der in Arbeitsstellung die Verbindung vom Vorsteuerraum (20) über die Steuerkanäle (21 und 22) zu der einen Seite des Förderkolbens (18) herstellt, wobei der zu dem Überströmkanal (19) führende Steuerkanal (66) durch den Steuerkolben geschlossen ist.

7. Schmierstoff-Injektor nach einem der Ansprüche 1 bis 6, dadurch gekennzeichnet, daß zur Verbindung vom Überströmkanal (19) zur anderen Seite des Förderkolbens (18) eine Sternscheibe (14) vorgesehen ist, die zwischen dem Zylinderkörper (13) und der Injektorspitze (8) angeordnet ist und Öffnungen zum Umschichten des Schmierstoffs freiläßt.

8. Vorrichtung zur Schmierung von wandernden Schmierstellen, insbesondere Zentralschmieranlage für Rollen (29) eines Kettenförderers (30) deren Lager (33) mit Schmierstoff über einen Schmiernippel (31) nachfüllbar sind, unter Verwendung eines an eine Speiseleitung angeschlossenen, druckluftbetätigten sowie zum Aufpressen auf den Schmiernippel (31) auf einem mit diesem verfahrbaren und an dessen Bewegung koppelbaren Schlitten (41) angeordneten Schmierstoff-Injektors (1) gemäß einem der Ansprüche 1 bis 7, mit einer wegabhängigen Steuerung des Abschmiervorgangs, wobei die Kopplung Schlitten-Injektor/Schmiernippel einen Druckluftzylinder (45) betätigt, dessen Kolbenstange (46) über einen Hebel (48) mit einem Mitnehmer (53, 54) des Schlittens (41) zur Synchronverfahrung Schlitten-Injektor/Schmiernippel verbunden ist, wobei weiterhin über ein vom Schlitten (41) betätigtes Steuerglied (61) die Luftzufuhr zum Verfahrkolben (4) des Injektors (1) zum Aufpressen der Injektorspitze (8) auf den Schmiernippel (31) freigebbar ist, wobei weiterhin kurz vor Ende des Verfahrwegs des Schlittens (41) ein weiteres Steuerglied (65) zum Abschalten der Schmierstoffbeaufschlagung angeordnet ist, wonach die Luftzufuhr zum Injektor (1) abgeschaltet und sodann die Luftdruckbeaufschlagung des Luftzylinders (45) weggenommen wird, und wobei schließlich zumindest eine Rückholfeder (43) zur Rückverfahrung des Schlittens (41) in seine Ausgangsposition vorgesehen ist, dadurch gekennzeichnet, daß die Koppelung Schlitten-Injektor/Schmiernippel durch ein von dem abzuschmierenden Teil geschaltetes Steuerglied (57) auslösbar ist, daß vom Schlitten (41) über ein weiteres Steuerglied (Verzögerungseinrichtung) ein Magnetventil zur Öffnung der Schmierstoffzufuhr von der Speiseleitung zum Injektor (1) betätigbar ist und damit dessen Steuerkolben (16) vom Schmierstoffdruck beaufschlagt und der Abschmiervorgang durchführbar ist und daß die Luftzufuhr zum Injektor (1) über eine Verzögerungseinrichtung abschaltbar ist.

9. Vorrichtung nach Anspruch 8, dadurch gekennzeichnet, daß die Steuerglieder (57, 61, 65) Näherungsschalter oder Lichtschranken sind.

10. Vorrichtung nach Anspruch 8 oder 9, dadurch gekennzeichnet, daß einander gegenüberliegend am Schlitten zwei Injektoren (1) angeordnet sind, die entweder gleichzeitig oder einzeln aktiviert den Schmiervorgang vornehmen, wobei mit der Kolbenstange (46) des Druckluftzylinders (45) zwei einander gegenüberliegend angeordnete Hebel (48) und Mitnehmer (53, 54) verbunden sind.

11. Vorrichtung nach einem der Ansprüche 8 bis 10, dadurch gekennzeichnet, daß zur Begrenzung des Rückfahrwegs des Schlittens (41) ein Pralldämpfer (56) vorgesehen ist.

**Claims**

1. Lubricant injector (1) for a device for the lubrication of travelling lubrication points, more particularly for rollers (29) of a chain conveyor (30), the bearings (33) of which can be topped up with lubricant via a lubricating nipple (31) onto which the injector (1) can be pushed during the lubricating operation, having a housing (2) in which is disposed a displacing piston (4) which can be actuated using compressed air, is spring-loaded and is joined to an injector tip (8) suitably formed to be placed onto the lubricating nipple (31), an annular space (9) being left between the displacing piston (4) and the housing (2), which space connects, via a bore (11) formed in the displacing piston (4), a lubricant inlet (10) formed in the housing (2) and a cylinder compartment (12) coaxially formed in the displacing piston (4) on the output side, in which is disposed a spring-loaded delivery piston (18) for the lubricant to be discharged, characterised in that into the cylinder compartment (12) is inserted, with clearance, a cylinder body (13) for the delivery piston (18) disposed exclusively therein, as well as for an additional control piston (16) arranged upstream of the delivery piston (18) and likewise spring-loaded to form a spill port (19) leading from one side of the delivery piston (18) to the other side, that the cylinder body (13) leaves clear a pilot compartment (20) in the cylinder compartment (12) and on one side of the delivery piston (18) has ports (21) controlled by the control piston (16) and has further control ports (22 and 66) which can be made to communicate with the spill port (19) and that the lubricating operation is triggered by the impetus given by the pressure of the lubricant being fed into the injector (1).

2. Lubricant injector according to claim 1, characterised in that the control piston (16) and the delivery piston (18) are operated independently of one another in their function and arrangement by the lubricant pressure and are servo-controlled by their springs (15 and 17 respectively) in the same direction of action, and that the spill port (19) is an annulus.

3. Lubricant injector according to claim 1 or 2, characterised in that a collar (25) is disposed in the injector tip (8) in the discharge port.

4. Lubricant injector according to one of claims 1 to 3, characterised in that the cylinder bore for the control piston (16) opposite the cylinder bore for the delivery piston (18) is closed by an inserted separator (26).

5. Lubricant injector according to one of claims 1 to 4, characterised in that the control piston (16) and the delivery piston (18) are located by identical springs (15, 17).

6. Lubricant injector according to one of claims 1 to 5, characterised in that between its two ends the control piston (16) possesses an annular compartment (28) formed by necking, which compartment in the working position provides the connection from the pilot compartment (20), via the control ports (21 and 22), to one side of the delivery piston (18), the control port (66) leading to the spill port (19) being closed by the control piston.

7. Lubricant injector according to one of claims 1 to 6, characterised in that to connect the spill port (19) to the other side of the delivery piston (18) a star-shaped disc (14) is provided which is disposed between the cylinder body (13) and the injector tip (8) and leaves openings clear for redistributing the lubricant.

8. A device for the lubrication of travelling lubrication points, more particularly a centralised lubrication system for rollers (29) of a chain conveyor (30), the bearings (33) of which can be topped up with lubricant by means of a lubricating nipple (31), using a lubricant injector (1) according to one of claims 1 to 7, which is linked to a feeder line, actuated by compressed air and, to enable it to be pushed onto the lubricating nipple (31), is disposed on a slide (41) which can be displaced with the latter and coupled to the movement thereof, having path-dependent control of the lubricating operation, the slide-injector/lubricating-nipple coupling actuating a pneumatic cylinder (45), the piston rod (46) of which is connected via a lever (48) to a driver (53, 54) of the slide (41) for synchronised displacement of the slide-injector/lubricating nipple, and, furthermore, by means of a control member (61) actuated by the slide (41), the air supply to the displacing piston (4) of the injector (1) can be cleared for pushing the injector tip (8) onto the lubricating nipple (31), in addition a further control member (65) for shutting off the application of the lubricant being disposed shortly before the end of the slide's (41) displacement path, after which the air supply to the injector (1) is interrupted and the supply of compressed air to the air cylinder (45) then withdrawn, with, finally, at least one return spring (43) being provided to return the slide (41) to its starting position, characterised in that the slide-injector/lubricating-nipple coupling can be triggered by a control member (57) activated by the part that is to be lubricated, that the slide (41) is able to actuate, via a further control member (delay mechanism), a solenoid valve to open the lubricant supply from the feeder line to the injector (1), and hence the control piston (16) thereof can be subjected to the pressure of the lubricant and the lubrication process carried out, and that the air supply to the injector (1) can be shut off via a delay mechanism.

9. The device according to claim 8, characterised in that the control members (57, 61, 65) are proximity switches or light barriers.

10. The device according to claim 8 or 9, characterised in that opposite one another on the slide are disposed two injectors (1), which activated either simultaneously or individually carry out the lubricating operation, two mutually opposed levers (48) and drivers (53, 54) being connected to the piston rod (46) of the pneumatic cylinder (45).

11. The device according to one of claims 8 to 10, characterised in that a deflector (56) is provided to limit the return path of the slide (41).

**Revendications**

1. Injecteur de lubrifiant (1) pour un dispositif destiné lubrifier des points de graissage mobiles, notamment pour des galets (29) d'un convoyeur à chaîne (30), dont les paliers (33) peuvent être alimentés en lubrifiant par l'intermédiaire d'un graisseur (31) sur lequel l'injecteur (1) peut être appliqué au cours de l'opération de lubrification, avec un corps (2) dans lequel est agencé un piston de déplacement (4) pouvant être actionné par de l'air comprimé, soumis à l'action d'un ressort, et relié à une pointe d'injecteur (8) réalisée de manière à pouvoir s'appliquer sur le graisseur (31), un espace annulaire (9) étant laissé libre entre le piston de déplacement (4) et le corps (2), cet espace annulaire reliant, par l'intermédiaire d'un alésage (11) réalisé dans le piston de déplacement (4), une entrée de lubrifiant (10) réalisée dans le corps (2) à une chambre cylindrique (12) réalisée coaxialement dans le piston de déplacement (4), côté éjection, et dans laquelle est agencé un piston d'éjection (18) soumis à l'action d'un ressort et destiné au lubrifiant à délivrer, caractérisé en ce que dans la chambre cylindrique (12) est agencé un corps de cylindre (13) pour le piston d'éjection (18) exclusivement logé dans ce corps de cylindre, ainsi que pour un piston supplémentaire de commande (16), en amont du piston d'éjection, également soumis à l'action d'un ressort, et logé dans le corps de cylindre avec jeu, en vue de réaliser un canal de communication (19) conduisant d'un des côtés du piston d'éjection (18) vers l'autre, en ce que le corps de cylindre (13) laisse libre, dans la chambre cylindrique (12), une chambre pilote (20), et comporte des canaux pilotés par le piston de commande (16), en direction de l'un des côtés du piston d'éjection (18), ainsi que d'autres canaux de commande (22 et 66) pouvant être mis en liaison avec le canal de communication (19), et en ce que l'opération de lubrification est déclenchée par l'impulsion de pression de l'alimentation en lubrifiant de l'injecteur (1).

2. Injecteur de lubrifiant selon la revendication 1, caractérisé en ce que le piston de commande (16) et le piston d'éjection (18) sont, dans leur fonction et leur agencement, actionnés indépendamment l'un de l'autre, par la pression du lubrifiant, et sont pilotés auxiliairement par leurs ressorts (15, 17), dans la même direction d'action, et en ce que le canal de communication (19) est conçu à la manière d'un anneau circulaire.

3. Injecteur de lubrifiant selon la revendication 1 ou 2, caractérisé en ce que dans la pointe d'injecteur (8), à l'intérieur du canal d'éjection, est agencée une garniture (25).

4. Injecteur de lubrifiant selon l'une des revendications 1 à 3, caractérisé en ce que l'alésage du piston de commande (16) est obturé par rapport à l'alésage du piston d'éjection (18), au moyen d'une pièce de séparation (26), rapportée.

5. Injecteur de lubrifiant selon l'une des revendications 1 à 4, caractérisé en ce que le piston de commande (16) et le piston d'éjection (18) sont chargés par des ressorts identiques (15, 17).

6. Injecteur de lubrifiant selon l'une des revendications 1 à 5, caractérisé en ce que le piston de commande (16) possède, entre ses deux extrémités, un espace annulaire (28) constitué par une réduction de section, qui, en position de travail, établit la communication entre la chambre pilote (20) et l'un des côtés du piston d'éjection (18) par l'intermédiaire des canaux de commande (21 et 22), le canal de commande (66) conduisant au canal de communication (19) étant fermé par le piston de commande.

7. Injecteur de lubrifiant selon l'une des revendications 1 à 6, caractérisé en ce que pour réaliser la liaison entre le canal de communication (19) et l'autre côté du piston d'éjection (18), est prévu un disque en étoile (14) qui est agencé entre le corps de cylindre (13) et la pointe d'injecteur (8) en laissant libres des ouvertures pour le transfert du lubrifiant.

8. Dispositif pour la lubrification de points de graissage mobiles, notamment une installation de graissage centralisé pour les galets (29) d'un convoyeur à chaîne (30), dont les paliers (33) peuvent être alimentés en lubrifiant par l'intermédiaire d'un graisseur (31), par l'utilisation d'un injecteur de lubrifiant (1) selon l'une des revendications 1 à 7, qui est raccordé à une conduite d'alimentation, actionné par l'air comprimé, et monté sur un chariot (41) en vue d'être appliqué sur le graisseur (31), le chariot pouvant se déplacer avec le graisseur et pouvant être couplé à son mouvement de déplacement, l'opération de lubrification étant asservie au déplacement, le couplage chariot-injecteur/graisseur actionnant un vérin pneumatique (45) dont la tige de piston (46) est reliée, par l'intermédiaire d'un levier (48), à un entraîneur (53, 54) du chariot (41), en vue du déplacement synchronisé chariot-injecteur/graisseur, l'amenée d'air au piston de déplacement (4) de l'injecteur (1), pour l'application de la pointe d'injecteur (8) sur le graisseur (31), pouvant par ailleurs être libérée par un organe de commande (61) actionné par le chariot (41), un autre organe de commande (65), destiné à interrompre la sollicitation du lubrifiant, étant par ailleurs agencé juste avant la fin de la course de déplacement du chariot (41), après quoi l'alimentation en air de l'injecteur (1) est interrompue ainsi que l'amenée d'air comprimé au vérin pneumatique (45), au moins un ressort de rappel (43) étant finalement prévu pour le déplacement de retour du chariot dans sa position initiale, caractérisé en ce que le couplage chariot-injecteur/graisseur est enclenché par un organe de commande (57) actionné par la pièce à graisser, en ce que le chariot (41) actionne, par l'intermédiaire d'un autre organe de commande (dispositif de temporisation), une électrovanne pour ouvrir l'alimentation de lubrifiant de la conduite d'alimentation vers l'injecteur (1), ein actionnant ainsi son piston de commande (16) par la pression du lubrifiant, l'opération de lubrification pouvant alors être effectuée, et en ce que l'alimentation en air de l'injecteur (1) peut être interrompue au moyen d'un dispositif de temporisation.

9. Dispositif selon la revendication 8, caractérisé en ce que les organes de commande (57, 61, 65) sont des détecteurs de proximité ou des barrières photo-électriques.

10. Dispositif selon la revendication 8 ou 9, caractérisé en ce que deux injecteurs (1) sont agencés de manière opposée, leurs opérations de lubrification étant activées simultanément ou individuellement, deux leviers (48) et entraîneurs (53, 54) opposées mutuellement étant reliés à la tige de piston (46) du vérin pneumatique 45).

11. Dispositif selon l'une des revendications 8 à 10, caractérisé en ce que pour limiter la course de retour du chariot (41), on prévoit un amortisseur de choc (56).

Fig.1

Fig. 2

Fig. 3

Fig. 4

EP 0 274 559 B1

Fig. 5

# Fig.6

# Fig.7

# Fig. 8